# EUROPEAN PATENT APPLICATION

(11) **EP 1 961 491 A1**
(43) Date of publication of application: **27.08.2008**
(21) Application number: 06832712.1
(22) Date of filing: 16.11.2006
(51) Int. Cl.: B05C 5/00, B05D 1/26, G02F 1/1335

(54) **INK EJECTOR AND INK EJECTING METHOD**

(30) Priority: 30.11.2005 JP 2005347037
(71) Applicant: Sharp Kabushiki Kaisha, Osaka-shi, Osaka 545-8522 (JP)
(72) Inventor: YOSHIOKA, Chiyoshi, Nara 631-0806 (JP); KAWAI, Hidetsugu, Nara 639-0256 (JP)
(74) Representative: Brown, Kenneth Richard
(86) International application number: PCT/JP2006/322823
(87) International publication number: WO 2007/063712

(57) **Abstract**

The present invention provides an ink discharging apparatus capable of forming a high-quality film. An ink discharging apparatus (1) includes: an ink discharge section (2) which is movable relative to a substrate in order to discharge ink onto plural defective pixels scattering on the substrate; and a discharge time interval calculating section (4) which calculates a discharge time interval from the previous ink discharge to the ink discharge of this time, in accordance with the order of ink discharge onto plural defective pixels. The ink discharge section (2) controls an amount of discharged droplets of ink or the number of discharged droplets, in accordance with the discharge time interval calculated by the discharge time interval calculating section (4).

## Description

### TECHNICAL FIELD

The present invention relates to an ink discharging apparatus and an ink discharging method, which make it possible to quickly and precisely discharge ink onto an ink discharge target such as a defective pixel.

### BACKGROUND ART

Ink discharging technologies have recently been not only used for consumer-use printers but also widely used for apparatuses for manufacturing color filter panels (hereinafter, CF panels) of liquid crystal displays and for other manufacturing apparatuses. As such, the use of the technologies has been diversified.

An example of the above is an ink jet patterning technology by which a pattern is formed on a substrate by utilizing the ink discharging technologies. The ink jet patterning technology is a technology to directly print a miniature pattern on a substrate by discharging a small amount of liquid (ink) by an ink discharging apparatus. This ink jet patterning technology has drawn attention as a technology usable in process without vacuum, in place of a conventional pattern formation which utilizes photolithography and involves vacuum process.

Considerable efforts have been made to develop an apparatus for forming a CF panel by the ink jet patterning technology. Such an apparatus forms a CF panel in such a way that pixels are filled by allowing red (R), green (G), and blue (G) inks to land on respective RGB pixel areas formed on a glass substrate. Such an apparatus has particularly been used for manufacturing CF panels of liquid crystal displays which are increasingly upsized these days. The apparatus is, as a manufacturing apparatus, rigorously controlled in terms of processing time, and hence the apparatus is required to unfailingly complete the process within a certain period of short time.

The ink jet patterning technology has been not only used as a full-screen pixel printing technology but also widely used as a technology to repair a defect in a pixel due to contamination or adhesion of a foreign substance or due to color mixture. The repair of a defective pixel by the ink jet patterning technology is carried out in such a way that, in a case of a defection of a pixel due to leakage or the like of ink between adjacent pixels, the ink layer of the defective pixel in which mixture of inks has occurred is removed by a laser apparatus such as a YAG laser, and ink with a specified R, G, or B color is discharged again by the ink jet patterning technology onto the part after the removal.
[Patent Document 1] Japanese Unexamined Patent Publication No. 2003-21714 (published on January 24, 2003)
[Patent Document 2] Japanese Unexamined Patent Publication No. 2004-55520 (published on February 19, 2004)
[Patent Document 3] Japanese Unexamined Patent Publication No. 2004-82624 (published on March 18, 2004)

### DISCLOSURE OF INVENTION

However, the above-described conventional art has a disadvantage in that the thickness of a film formed by ink discharge increases as ink density increases on account of evaporation of an ink solvent, with the result that the quality of an image is deteriorated. Details of this advantage are given below.

In a series of operations for repairing a defective pixel, when a head starts to move on a substrate after leaving from a cap position and carrying out purge, the density of ink around a nozzle discharge hole inside the head partially increases as an ink solvent gradually evaporates through the nozzle discharge hole. As a result several droplets of ink initially discharged onto the defective pixel have increased densities. The extent of such increase in the ink density increases over the time elapsed from the departure of the head from the cap position and the purge. This phenomenon also occurs during a period in which, after a nozzle of a head discharges ink onto a defective pixel, the head moves to another defective pixel. The extent of increase in ink density also increases in this case.

Depending on the order of repair, defective pixels which have red (R), green (G), and blue (B) colors, respectively, and are scattered on a substrate, may be greatly different in terms of time from the purge to the first discharge of ink. For this reason the extent of partial increase in ink density due to gradual evaporation of an ink solvent through the nozzle discharge hole is different among the nozzles for the respective colors. As a result, even if the same number of droplets are discharged onto defective pixels, the differences in the ink density result in differences in thickness among the films formed by the ink discharge, and such differences in thickness in the films of the repaired pixels induce the deterioration of the image quality.

This problem may be solved by an arrangement such that a nozzle discharge hole of a head moving on a substrate is covered by a cap member which prevents the evaporation of an ink solvent, and the cap member is removed from the hole immediately before ink discharge. However, it is structurally very difficult to provide such a cap member, because of the following reasons. A gap between the nozzle discharge hole and the substrate is ideally very narrow, in consideration of stable discharge of ink. Typically the gap is about 0.5mm in an actual apparatus. In such a narrow gap, it is structurally very difficult to provide a cap member. Furthermore, it would be difficult in terms of control to timely open and close the cap of an ink discharge section which is provided in a head moving at a very high speed (e.g. 300mm/s). Furthermore, the surface of a nozzle is typically coated by a water-repellent film, and physical contact with the water-repellent film should be avoided as much as possible. This is because a scar or the like on the water-repellent film undermines the discharge stabilities such as a position where ink lands. It is therefore very difficult to provide, in a extremely narrow gap, a cap member which does not touch the nozzle surface as much as possible and is able to be speedily opened and closed.

Liquid crystal display apparatuses manufactured by manufacturing apparatuses adopting the aforesaid ink jet patterning technology have been increasingly upsized these days. It is therefore extremely important to realize discharge processing by which high-quality images are achieved because high-quality films with uniform thickness are formed on respective defective pixels scattering on a substrate.

The present invention was done to solve the problem above, and the objective of the present invention is to provide an ink discharging apparatus and an ink discharging method, which make it possible to form high-quality films.

To achieve the objective above, an ink discharging apparatus of the present invention is characterized by including: ink discharge means which is arranged to be movable relative to a medium in order to discharge ink onto plural ink discharge targets scattering on the medium; and discharge time interval calculating means for calculating, based on the order of discharging the ink onto the ink discharge targets, a discharge time interval indicating a period of time from an ink discharge to the next ink discharge, the ink discharge means controlling a discharge droplet amount of the ink discharged onto the ink discharge targets or the number of droplets to be discharged, in accordance with the discharge time interval calculated by the discharge time interval calculating means.

According to this, a discharge droplet amount of ink discharged onto ink discharge targets is controlled in accordance with a discharge time interval indicating a period of time from an ink discharge to the next ink discharge. Therefore, when the ink density increases as an ink solvent in the ink discharge means evaporates over time, it is possible to decrease a discharge droplet amount of ink over time in such a way as to cancel the increase. On account of this, even if the ink density increases as an ink solvent in the ink discharge means evaporates over time, the thickness of a film formed by the discharge of ink with increased density does not increase. As a result it is possible to provide an ink discharging apparatus which can form high-quality films.

To achieve the objective above, an ink discharging method of the present invention is characterized by using ink discharge means which is arranged to be movable relative to a medium in order to discharge ink onto plural ink discharge targets scattering on the medium, and including the steps of: calculating, based on the order of discharging the ink onto the ink discharge targets, a discharge time interval indicating a period of time from an ink discharge to the next ink discharge; and controlling a discharge droplet amount of the ink discharged onto the ink discharge targets or the number of droplets to be discharged, in accordance with the calculated discharge time interval.

According to this, a discharge droplet amount of ink discharged onto ink discharge targets is switched in accordance with a discharge time interval indicating a period of time from an ink discharge to the next ink discharge. Therefore, when the ink density increases as an ink solvent in the ink discharge means evaporates over time, it is possible to decrease a discharge droplet amount of ink over time in such a way as to cancel the increase. On account of this, even if the ink density increases as an ink solvent in the ink discharge means evaporates over time, the thickness of a film formed by the discharge of ink with increased density does not increase. As a result it is possible to provide an ink discharging apparatus which can form high-quality films.

As discussed above, the ink discharging apparatus of the present invention is arranged such that the ink discharge means controls a discharge droplet amount of the ink discharged onto the ink discharge targets or the number of droplets to be discharged, in accordance with the discharge time interval calculated by the discharge time interval calculating means. Therefore, when the ink density increases as an ink solvent in the ink discharge means evaporates over time, it is possible to decrease a discharge droplet amount of ink over time or the number of droplets to be discharged, in such a way as to cancel the increase. As a result it is possible to form high-quality films.

As discussed above, the ink discharging method of the present invention is arranged such that a discharge droplet amount of the ink discharged onto the ink discharge targets or the number of droplets to be discharged is controlled in accordance with the calculated discharge time interval. Therefore, when the ink density increases as an ink solvent in the ink discharge means evaporates over time, it is possible to decrease a discharge droplet amount of ink over time or the number of droplets to be discharged, in such a way as to cancel the increase. As a result it is possible to form high-quality films.

Additional objects, features, and strengths of the present invention will be made clear by the description below. Further, the advantages of the present invention will be evident from the following explanation in reference to the drawings.

### BRIEF DESCRIPTION OF DRAWINGS

Fig. 1 relates to an embodiment of the present invention and is a block diagram showing a substantial part of an ink discharging apparatus.
Fig. 2 is a schematic of an ink discharge section of the ink discharging apparatus.
Fig. 3(a) is an oblique perspective figure showing the appearance of a head of the ink discharge section.
Fig. 3(b) is a cross section of the head and a substrate on which a CF panel receiving ink discharged from the head is formed.
Fig. 4 is used for describing the order of repair of defective pixels onto which the ink discharge apparatus discharges ink.
Fig. 5 is used for describing the order of repair of other defective pixels onto which the ink discharge apparatus discharges ink.
Fig. 6 is a graph showing the relationship between a discharge time interval at which the ink discharging apparatus discharges ink and thickness of a film formed by the ink discharge from the ink discharging apparatus.

### REFERENCE NUMERALS

- 1: ink discharging apparatus
- 2: ink discharge section (ink discharge means)
- 3: discharge order determining section (discharge order determining means)
- 4: discharge time interval calculating section (discharge time interval calculating means)
- 5: discharge pattern formation section (discharge pattern formation means)
- 6: pre-shake section (pre-shake means)
- 7: head
- 9R, 9G, 9B: defective pixels (ink discharge targets)
- 10: nozzle
- 17: comparing section

### BEST MODE FOR CARRYING OUT THE INVENTION

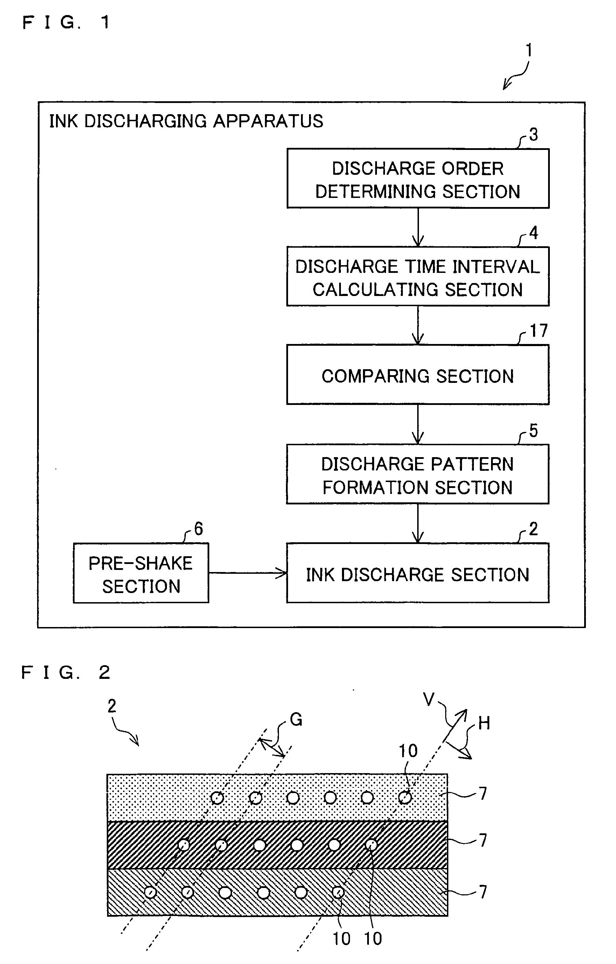

The following will discuss an embodiment of the present invention with reference to Figs. 1 through 6.

Fig. 1 relates to an embodiment of the present invention and is a block diagram showing a substantial part of an ink discharging apparatus 1. The ink discharging apparatus 1 includes an ink discharge section 2. The ink discharge section 2 is arranged to be movable relative to a CF panel formed on a substrate in order to discharge ink onto defective pixels scattering on the CF panel.

Fig. 2 is a schematic of the ink discharge section 2. The ink discharge section 2 has three heads 7 for red (R), green (R), and blue (B) colors, respectively. Each head 7 is provided with nozzles 10.

In the head 7 shown in Fig. 2, the nozzles 10 are arranged to form a parallelogram in such a way that the outermost nozzles 10 are aligned along the main scanning direction V of the ink discharge section 2, when the ink discharge section 2 is rotated in the anticlockwise direction. As the heads 7 tilt in the main scanning direction V and the sub scanning direction H, the print width G between abutting nozzles 10 decreases, with the result that a larger number of nozzles are allocated to the defective pixels. As the number of nozzles allocated to the defective pixels increases, the frequency of discharge from each allocated nozzle 10 decreases. As a result, even if the ink discharge section 2 rapidly moves, it is possible to deliver a predetermined amount of droplets to the defective pixels while the ink discharge section 2 moves.

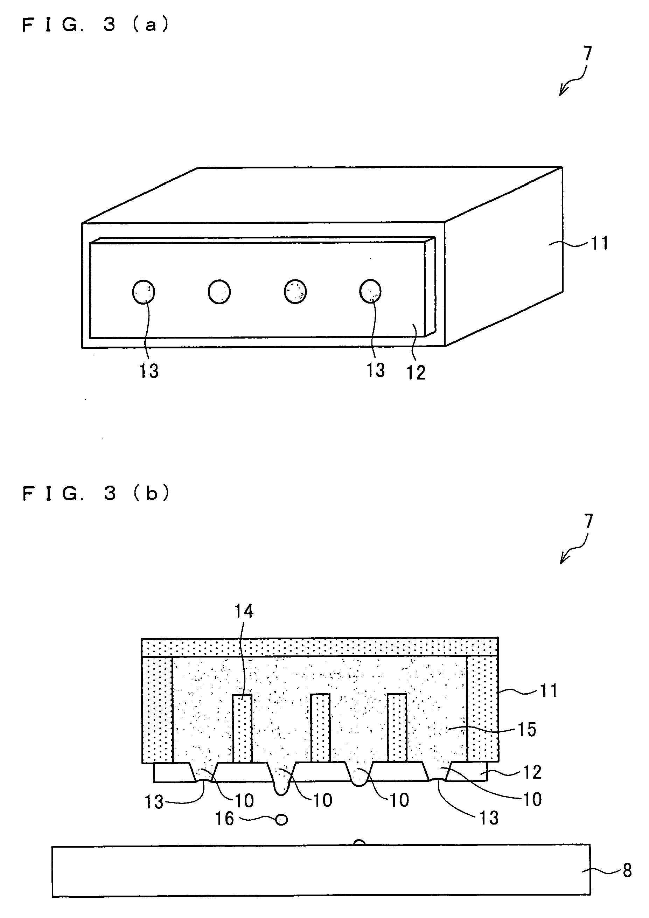

Fig. 3(a) is an oblique perspective figure showing the appearance of the head 7. Fig. 3(b) is a cross section of the head 7 and a substrate 8 on which the CF panel which is the target of ink discharge from the head 7 is formed. The head 7 is mainly constituted by a nozzle plate 12 and a housing 11, and stores ink. The opening of the housing 11 is covered by the nozzle plate 12. The nozzle plate 12 has nozzles 10 which are provided at predetermined intervals. Each nozzle 10 has an ink discharge hole 13 which is about 20pm in diameter. In the housing 11, piezoelectric members 14 are provided to form ink flow channels 15. The piezoelectric members 14 shake in response to an applied voltage so that an ink droplet 16 is discharged onto the substrate 8 through each nozzle 10.

In a series of operations for repairing a defective pixel, when the head 7 starts to move on the substrate 8 after leaving a cap position and carrying out purge, the density of ink around the nozzle discharge hole 13 inside each nozzle 10 partially increases as an ink solvent gradually evaporates through the nozzle discharge hole 13. As a result several ink droplets 16 initially discharged onto the defective pixel have increased densities. The extent of such increase in the ink density increases over the time elapsed from the departure of the head 7 from the cap position and the purge.

Again referring to Fig. 1, the ink discharging apparatus 1 includes a discharge order determining section 3. The discharge order determining section 3 determines the order of repair of defective pixels on the CF panel on the substrate 8 by discharging ink thereto. Before ink is actually discharged onto the defective pixels, the discharge order determining section 3 determines the order of repair of the defective pixels in such a way as to minimize, with reference to the positions of the defective pixels scattering on the CF panel on the substrate, the number of times the heads 7 perform scanning, and to shorten the processing time as much as possible.

The ink discharging apparatus 1 is further provided with a discharge time interval calculating section 4. The discharge time interval calculating section 4 calculates a discharge time interval indicating a period of time from the previous ink discharge to the ink discharge of this time, with reference to the order of repair having been determined by the discharge order determining section 3. The discharge time interval calculating section 4 calculates a period of time (discharge time interval) from a time point at which the heads 7 first discharge ink to a time point at which the heads 7 discharge ink and repair the next defective pixel, with reference to, for example, the traveling speed of the heads 7 in the X and Y directions, at which the heads 7 move in accordance with the determined order of repair.

The ink discharging apparatus 1 is further provided with a comparing section 17. The comparing section 17 compares the discharge time interval calculated by the discharge time interval calculating section 4 with a predetermined reference time.

The ink discharging apparatus 1 is further provided with a discharge pattern formation section 5. The discharge pattern formation section 5 selects an ink discharge pattern in accordance with the result of the comparison by the comparing section 17, generates a discharge timing signal indicating the selected ink discharge pattern, and supplies the generated signal to the ink discharge section 2. The discharge pattern formation section 5 operates as follows: in accordance with a period of time from ink discharge from the heads 7 of the ink discharge section 2 to the next ink discharge onto the defective pixels, an ink discharge pattern for generating a discharge timing signal supplied to each nozzle 10 is varied; an amount of ink discharged onto the defective pixels is increased or decreased in response to the change in the pattern; as a result an amount of ink discharged onto the defective pixels is properly corrected so that the film thickness is precisely controlled.

The ink discharging apparatus 1 is further provided with a pre-shake section 6. The pre-shake section 6 shakes each nozzle 10 at regular intervals each time the heads perform scanning, so that the ink around the nozzle discharge holes 13 in the heads 7 is stirred. Since increase in ink viscosity is prevented in this way, the extent of increase in ink viscosity over time is restrained and a change in a state of ink discharge is restrained.

The pre-shake section 6 also stirs ink by performing pre-shake immediately before ink discharge onto the defective pixels, thereby preventing increase in ink viscosity.

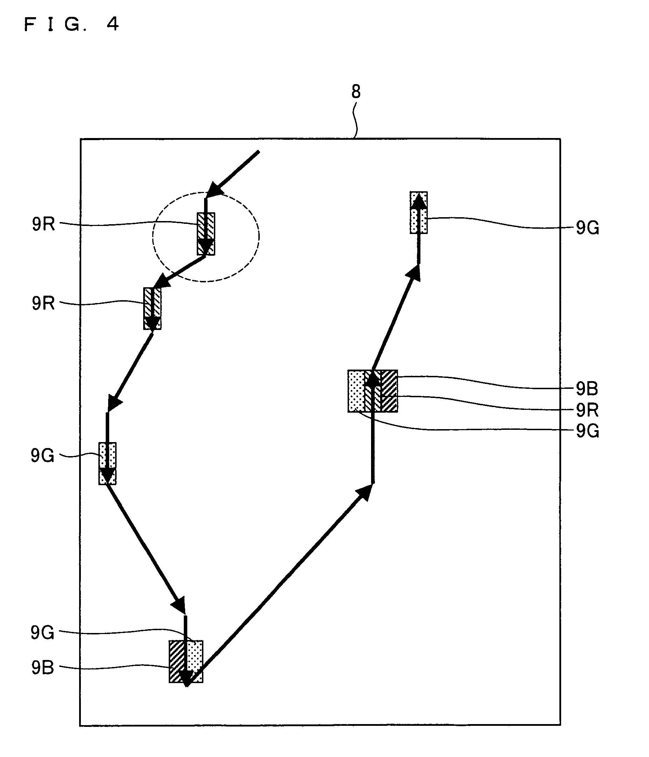

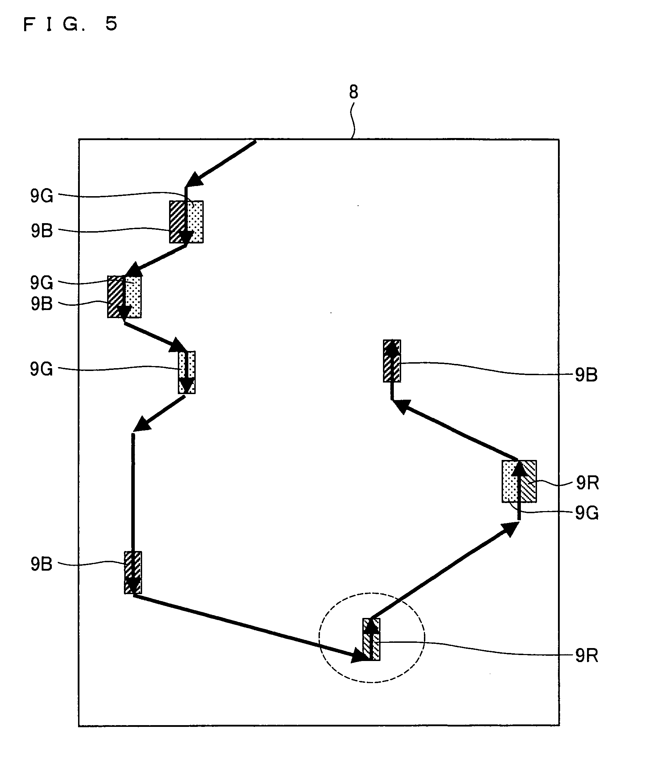

Fig. 4 is used for describing the order of repair of defective pixels 9R, 9G, and 9B onto which the ink discharging apparatus 1 discharges ink. Fig. 5 is used for describing the order of repair of other defective pixels 9R, 9G, and 9B. Figs. 4 and 5 show respective examples of how the order of repair of defective pixels 9R, 9G, and 9B scattering on the CF panel on the substrate 8 is determined by the discharge order determining section 3.

In the example shown in Fig. 4, when the head discharge section 2 leaves a cap position where the nozzle discharge hole 13 of each nozzle 10 of the head discharge section 2 is covered by a cap, the head discharge section 2 performs purge outside the surface of the substrate 8 and then starts to move relative to the substrate 8.

As shown in Fig. 4, first, the head discharge section 2 reaches the red defective pixel 9R at the upper-left of the substrate 8 in Fig. 4. Then the head 7 of red color of the head discharge section 2 discharges red ink onto the defective pixel 9R, while performing scanning on the defective pixel 9R. Subsequently, the head discharge section 2 moves in a lower-left direction in Fig. 4 so as to reach another defective pixel 9R. Then the head 7 of red color of the head discharge section 2 discharges red ink onto said another defective pixel 9R while performing scanning on said another defective pixel 9R.

Thereafter, the head discharge section 2 further moves in a lower-left direction and reaches a defective pixel 9G of green color. The head 7 of green color of the head discharge section 2 discharges green ink onto the defective pixel 9G while performing scanning on the defective pixel 9G. Subsequently the head discharge section 2 moves in a lower-right direction in Fig. 4 so as to reach a blue-color defective pixel 9B and a green-color defective pixel 9G which are adjacent to each other. The head 7 of blue color and the head 7 of green color of the head discharge section 2 discharge blue ink onto the defective pixel 9B and green ink onto the defective pixel 9G, respectively, while performing scanning on the respective defective pixels 9B and 9G.

Then the head discharge section 2 moves in an upper-right direction in Fig. 4 so as to reach neighboring defective pixels 9B, 9R, and 9G. While performing scanning on the respective defective pixels 9B, 9R, and 9G, the head 7 of blue color of the head discharge section 2 discharges blue ink onto the defective pixel 9B, the head 7 of red color discharges red ink onto the defective pixel 9R, and the head 7 of green color discharges green ink onto the defective pixel 9G. Thereafter the head discharge section 2 further moves in an upper-left direction in Fig. 4 so as to reach a defective pixel 9G. The head 7 for green color discharges green ink onto the defective pixel 9G.

In the example shown in Fig. 5, being similar to the example shown in Fig. 4, after the head discharge section 2 leaves a cap position, the head discharge section 2 performs purge outside the surface of the substrate 8, and then starts to move relative to the substrate 8.

First, the head discharge section 2 reaches defective pixels 9B and 9G which are adjacent to one another and are at the upper left of the substrate 8 in Fig. 5. Then the head discharge section 2 performs scanning on the defective pixels 9B and 9G, while the head 7 for blue color of the head discharge section 2 discharges blue ink onto the defective pixel 9B and the head 7 for green color discharges green ink onto the defective pixel 9G. Then the head discharge section 2 moves in a lower-left direction in Fig. 5 so as to reach other neighboring defective pixels 9G and 9B. The head discharge section 2 performs scanning on said other defective pixels 9B and 9G, while the head 7 for blue color discharges blue ink onto the defective pixel 9B and the head 7 for green color discharges green ink onto the defective pixel 9G.

Thereafter, the head discharge section 2 moves in a lower-right direction in Fig. 5 and reaches a defective pixel 9G. The head discharge section 2 performs scanning on this defective pixel 9G, while the head 7 for green color discharges green ink onto the defective pixel 9G. Then the head discharge section 2 moves in a lower-left direction. The head discharge section 2 then performs scanning on a defective pixel 9B, while the head 7 of blue color of the head discharge section 2 discharges blue ink onto the defective pixel 9B.

Then the head discharge section 2 moves in a lower-right direction and reaches a defective pixel 9R. The head discharge section 2 performs scanning on this defective pixel 9R, while the head 7 of red color of the head discharge section 2 discharges red ink onto the defective pixel 9R.

Then the head discharge section 2 moves in an upper-right direction so as to reach neighboring defective pixels 9G and 9R. The head discharge section 2 performs scanning on these defective pixels 9G and 9R, while the head 7 of green color of the head discharge section 2 discharges green ink onto the defective pixel 9G and the head 7 of red color discharges red ink onto the defective pixel 9R.

Thereafter the head discharge section 2 moves in an upper-left direction so as to reach a defective pixel 9B. The head discharge section 2 performs scanning on this defective pixel 9B, while the head 7 of blue color of the head discharge section 2 discharges blue ink onto the defective pixel 9B.

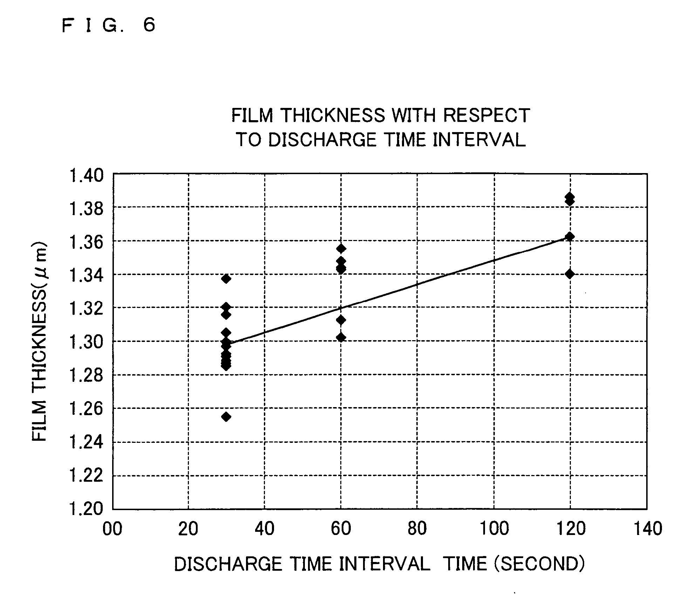

Fig. 6 is a graph showing the relationship between a discharge time interval at which the ink discharge section 2 discharges ink and the thickness of a film formed by ink discharge from the ink discharge section 2. In the graph the horizontal axis indicates a discharge time interval whereas the vertical axis indicates thickness of a film. A discharge time interval indicates a period of time from the previous ink discharge to the ink discharge of this time. A discharge time interval includes both of the following elapsed times: time until ink is first discharged onto the defective pixels with the respective colors after the nozzles 10 of the heads 7 of the respective colors of the head discharge section 2 perform purge; and time until ink is discharged onto the next defective pixels with the same colors after the first ink discharge onto the defective pixels.

As shown in Fig. 6, as a discharge time interval increases, the thickness of a film formed by discharge increases. For example, as a discharge time interval increases from 30 seconds to 120 seconds, the film thickness generally increases about 5%, i.e. from 1.30µm to 1.36µm, although measurement results are dispersed to some extent.

Again referring to Fig. 4, the defective pixel 9R indicated by the dotted line is the first target of repair, after the ink discharge section 2 starts to move. In the meanwhile, the defective pixel 9R indicated by the dotted line in Fig. 5 becomes the target of repair only after plural defective pixels 9B and 9G are repaired. The defective pixel 9R shown in Fig. 4 and the defective pixel 9R shown in Fig. 5 are significantly different from one another in terms of a discharge time interval from a time point at which the ink discharge section 2 starts to move after performing purge to a time point at which repair is carried out by ink discharge.

For this reason, as shown in Fig. 6, the thickness of a film after burning ink is different if discharge time intervals are significantly different between two cases, because the density of discharged ink is different between these cases even if the same number of ink droplets are discharged from the same nozzle to respective defective pixel sections. A difference in film thickness induces deterioration in the quality of images displayed by the pixels. Such a problem is fatal in television receivers of today, which are required to display high -quality images.

For this reason, in the present embodiment the number of discharged droplets is controlled to be different between the defective pixel 9R indicated by the dotted line in Fig. 4 and the defective pixel 9R indicated by the dotted line in Fig. 5, for the purpose of causing these pixels to have the same film thickness. In concrete terms, based on the relationship between a discharge time interval and film thickness shown in Fig. 6, the frequency of discharge to the defective pixel 9R indicated by the dotted line in Fig. 5 is arranged to be low as compared to the defective pixel 9R indicated by the dotted line in Fig. 4, so that the defective pixel 9R shown in Fig. 5 is repaired with a smaller amount of discharged ink.

For example, a table recording a first discharge droplet amount and a second discharge droplet amount smaller than the first discharge droplet amount is prepared in advance. When a discharge time interval is not longer than a predetermined reference time, ink is discharged onto a defective pixel in accordance with a discharge timing signal indicating a first ink discharge pattern corresponding to the first discharge droplet amount. On the other hand, when a discharge time interval is longer than the predetermined reference time, ink is discharged onto a defective pixel in accordance with a discharge timing signal indicating a second ink discharge pattern corresponding to the second discharge droplet amount which is smaller than the first discharge droplet amount. This arrangement makes it possible to switch an amount of ink discharged to a defective pixel between the first discharge droplet amount and the second discharge droplet amount, in accordance with a discharge time interval. It is therefore possible to switch a discharge droplet amount in such a way as to reduce the discharge droplet amount, when a discharge time interval is longer than a predetermined reference time.

The above-described example presupposes that the control is performed by switching a discharge droplet amount. The present invention, however, is not limited to this arrangement. The frequency of discharging droplets may be controlled in place of the control of a discharge droplet amount.

The above-described arrangement can be realized by arranging the discharge pattern formation section 5 in such a manner that: either a first ink discharge pattern or a second ink discharge pattern is selected in accordance with a result of comparison by comparing section 17 between a discharge time interval and a reference time by the discharge time interval calculating section 4, and a discharge timing signal indicating the selected ink discharge pattern is generated and supplied to the ink discharge section 2.

More specifically, in Fig. 4, a discharge time interval, which indicates time until the head discharge section 2 first discharges ink onto a defective pixel 9R indicated by the dotted line after performing purge outside the surface of the substrate 8, is not longer than a predetermined reference time. Therefore ink is discharged onto the defective pixel 9R indicated by the dotted line in Fig. 4, in accordance with the first discharge droplet amount. Meanwhile, in Fig. 5, a discharge time interval, which indicates time until the head discharge section 2 first discharges ink onto a defective pixel 9R indicated by the dotted line after performing purge outside the surface of the substrate 8, is longer than a predetermined reference time. Therefore ink is discharged onto the defective pixel 9R indicated by the dotted line in Fig. 5, in accordance with the second discharge droplet amount which is smaller than the first discharge droplet amount.

It is noted that Fig. 6 shows results of measurement of film thickness when 10 droplets are discharged onto a pixel from each of 10 nozzles. a variation in ink density on account of evaporation of the solvent is particularly serious in first several droplets. That is to say, the density of ink increases and the film thickness increases particularly in first several droplets. After the several droplets, the density of ink decreases and returns to the first. The film thickness also decreases and returns to normal. Ink with high density is discharged in the first droplet in particular. Thereafter ink with high density is gradually discharged from the head and hence the ink density returns to the normal.

The density of ink discharged from the head varies in this way. For this reason, the head is controlled in such a manner that a discharge droplet amount (number) is calculated in consideration of the increase in the ink density in the first several droplets, and ink is discharged based on the calculation.

In case where defective pixels are repaired by allocating a larger number of nozzles to each of the defective pixels, the influence of the first several droplets having increased ink density is more significant and hence the film thickness increases more. Therefore the frequency of discharge controlled based on a discharge time interval must be adjusted in accordance with the number of nozzles allocated to a pixel.

It is possible to allocate a larger number of nozzles to a defective pixel for supplying a predetermined droplet amount thereto, by, for example, considerably tilting the heads in the main scanning direction and in the sub scanning direction so as to narrow the print width between the nozzles. A discharge amount per nozzle decreases in this case. Therefore the influence of the first droplet having increased ink density increases as the proportion the first droplet is increased in each nozzle and the discharge time interval increases.

In the meanwhile, in a large-sized defective pixel, a predetermined droplet amount is large as compared to a small defective pixel, as a matter of course. In this case, a large number of nozzles can be allocated to a large pixel, but the proportion of ink with original density is high because a large-sized pixel requires a large amount of droplets. Therefore the influence of the first droplet is less significant in comparison with the aforesaid case.

In the present embodiment, a discharge time interval is assumed as a period of time from a time point at which the ink discharge section 2 starts to move after performing purge to a time point at which ink discharge for repair is carried out. The present invention, however, is not limited to this arrangement. A discharge time interval may be a period of time from previous ink discharge onto a defective pixel on a CF panel to ink discharge of this time.

The embodiment above discusses a case of defective pixels on a CF panel. The present invention, however, is not limited to this case. It is possible to apply the present invention to manufacture of an electroluminescence (EL) display apparatus having plural discharge target sections forming a matrix or a stripe pattern. It is also possible to apply the present invention to manufacture of a back substrate of a plasma display apparatus. In addition, it is possible to apply the present invention to manufacture of an image display apparatus including an electron emission element and manufacture of wires.

The invention being thus described, it will be obvious that the same way may be varied in many ways within the scope of the claims. Such variations are not to be regarded as a departure from the spirit and scope of the invention, and all such modifications as would be obvious to one skilled in the art are intended to be included within the scope of the following claims.

The ink discharging apparatus of the present invention is preferably adapted to further include comparing means for comparing, with a predetermined reference time, the discharge time interval calculated by the discharge time interval calculating means, the ink discharge means controlling the discharge droplet amount or the number of the droplets, in accordance with a result of comparison by the comparing means.

According to this arrangement, a discharge time interval is arranged to be longer than a predetermined reference time. Therefore, even if the ink density increases due to the evaporation of an ink solvent in the ink discharge means, a discharge droplet amount of ink is decreased in such a way as to cancel the increase in the ink density.

The ink discharging apparatus of the present invention is preferably adapted to further include discharge order determining means for determining the order of discharging the ink onto the ink discharge targets, the discharge time interval calculating means calculating the discharge time interval based on the order determined by the discharge order determining means.

This arrangement makes it possible to easily calculate a discharge time interval with a simple arrangement.

The ink discharging apparatus of the present invention is preferably adapted to further include discharge pattern formation means for selecting an ink discharge pattern in accordance with the discharge time interval calculated by the discharge time interval calculating means, generating a discharge timing signal indicating the selected ink discharge pattern, and supplying the generated discharge timing signal to the ink discharge means.

This arrangement makes it possible to supply, to the ink discharge means, a discharge timing signal for switching a discharge droplet amount in accordance with a discharge time interval.

The ink discharging apparatus of the present invention is preferably adapted to further include the ink discharge means has a nozzle from which the ink is discharged onto the ink discharge targets, the ink discharging apparatus further comprising pre-shake means for shaking the nozzle at regular intervals.

This arrangement makes it possible to prevent the ink viscosity from increase by stirring ink around an ink discharge hole of a nozzle, restrain the increase in the ink viscosity over time, and restrain a change in the aforesaid ink discharge state.

The ink discharging apparatus of the present invention is preferably adapted so that the pre-shake means shakes the nozzle when the ink discharge means which is relatively moving changes a traveling direction.

This arrangement makes it possible to easily perform pre-shake at regular intervals without considering discharge timings, prevent the ink viscosity from increase by stirring ink around an ink discharge hole of a nozzle, restrain the increase in the ink viscosity over time, and restrain a change in the aforesaid ink discharge state.

The ink discharging apparatus of the present invention is preferably adapted so that the medium is a CF panel for a liquid crystal display apparatus, and the ink discharge targets are defective pixels on the CF panel. This arrangement makes it possible to obtain an ink discharging apparatus which can form a high-quality CF panel by repairing defective pixels on a CF panel.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

The present invention may be used for repairing a defective pixel occurring on a CF panel. The present invention can also be used for manufacturing an electroluminescence (EL) display apparatus having plural discharge target sections forming a matrix or stripes. The present invention can also be used for manufacturing a back substrate of a plasma display apparatus, for manufacturing an image display apparatus including an electron emission element, and for manufacturing wires.

## Claims

1. An ink discharging apparatus comprising:
ink discharge means which is arranged to be movable relative to a medium in order to discharge ink onto plural ink discharge targets scattering on the medium; and
discharge time interval calculating means for calculating, based on the order of discharging the ink onto the ink discharge targets, a discharge time interval indicating a period of time from an ink discharge to the next ink discharge,
the ink discharge means controlling a discharge droplet amount of the ink discharged onto the ink discharge targets or the number of droplets to be discharged, in accordance with the discharge time interval calculated by the discharge time interval calculating means.

2. The ink discharging apparatus as defined in claim 1, further comprising comparing means for comparing, with a predetermined reference time, the discharge time interval calculated by the discharge time interval calculating means,
the ink discharge means controlling the discharge droplet amount or the number of the droplets, in accordance with a result of comparison by the comparing means.

3. The ink discharging apparatus as defined in claim 1, further comprising discharge order determining means for determining the order of discharging the ink onto the ink discharge targets,
the discharge time interval calculating means calculating the discharge time interval based on the order determined by the discharge order determining means.

4. The ink discharging apparatus as defined in claim 1, further comprising discharge pattern formation means for selecting an ink discharge pattern in accordance with the discharge time interval calculated by the discharge time interval calculating means, generating a discharge timing signal indicating the selected ink discharge pattern, and supplying the generated discharge timing signal to the ink discharge means.

5. The ink discharging apparatus as defined in claim 1,
wherein, the ink discharge means has a nozzle from which the ink is discharged onto the ink discharge targets,
the ink discharging apparatus further comprising pre-shake means for shaking the nozzle at regular intervals.

6. The ink discharging apparatus as defined in claim 5,
wherein, the pre-shake means shakes the nozzle when the ink discharge means which is relatively moving changes a traveling direction.

7. The ink discharging apparatus as defined in claim 1,
wherein, the medium is a CF panel for a liquid crystal display apparatus, and
the ink discharge targets are defective pixels on the CF panel.

8. An ink discharging method using ink discharge means which is arranged to be movable relative to a medium in order to discharge ink onto plural ink discharge targets scattering on the medium,
the method comprising the steps of:
calculating, based on the order of discharging the ink onto the ink discharge targets, a discharge time interval indicating a period of time from an ink discharge to the next ink discharge; and
controlling a discharge droplet amount of the ink discharged onto the ink discharge targets or the number of droplets to be discharged, in accordance with the calculated discharge time interval.

9. The ink discharging method as defined in claim 8,
wherein, the calculated discharge time interval is compared with a predetermined reference time, and
the discharge droplet amount or the number of the droplets is controlled in accordance with a result of comparison.

10. The ink discharging method as defined in claim 8,
wherein, the order of discharging the ink onto the ink discharge targets is determined, and the discharge time interval is calculated based on the order thus determined.

11. The ink discharging method as defined in claim 8,
wherein, an ink discharge pattern is selected in accordance with the calculated discharge time interval, a discharge timing signal indicating the selected ink discharge pattern is generated, and the generated discharge timing signal is supplied to the ink discharge means.

12. The ink discharging method as defined in claim 8,
wherein, the ink discharge means has a nozzle from which the ink is discharged onto the ink discharge targets, and
the nozzle is shaken at regular intervals.

13. The ink discharging method as defined in claim 12,
wherein, the nozzle is shaken when the ink discharge means which is relatively moving changes a traveling direction.

14. The ink discharging method as defined in claim 8,
wherein, the medium is a CF panel for a liquid crystal display apparatus, and
the ink discharge targets are defective pixels on the CF panel.
